# FASCICULE DE BREVET EUROPEEN

(11) **EP 2 349 667 B1**
(45) Date de publication et mention de la délivrance du brevet: **19.04.2017**
(21) Numéro de dépôt: 09756025.4
(22) Date de dépôt: 14.10.2009
(51) Int. Cl.: B29C 33/06, B29C 35/08, B29C 43/52, H05B 6/02, H05B 6/10, B29C 33/08

(54) **DISPOSITIF DE TRANSFORMATION DE MATERIAUX UTILISANT UN CHAUFFAGE PAR INDUCTION PERMETTANT UN PRECHAUFFAGE DU DISPOSITIF**
VORRICHTUNG ZUR UMWANDLUNG VON MATERIALIEN UNTER VERWENDUNG VON INDUKTIONSERWÄRMUNG, DIE VORERWÄRMUNG DER VORRICHTUNG ERMÖGLICHT
DEVICE FOR CONVERTING MATERIALS USING INDUCTION HEATING THAT ENABLES PREHEATING OF THE DEVICE

(30) Priorité: 20.10.2008 FR 0857126
(43) Date de publication de la demande: 03.08.2011
(73) Titulaire: Roctool, 73375 Le Bourget du Lac Cedex (FR)
(72) Inventeur: GUICHARD, Alexandre, F-73370 La Chapelle du Mont du Chat (FR); FEIGENBLUM, José, F-73170 Saint-paul (FR)
(74) Mandataire: Ipside
(86) Numéro de dépôt international: PCT/FR2009/051960
(87) Numéro de publication internationale: WO 2010/046582

(56) Documents cités:
- AT-A4- 504 784
- FR-A- 2 890 588

## Description

La présente invention concerne un dispositif et un procédé utilisant un chauffage par induction, dans le but de réaliser la transformation, notamment par moulage, de matériaux, en particulier de matériaux composites à matrice thermoplastique ou thermodurcissable.

Il est connu un dispositif, tel que celui décrit dans la demande internationale n° WO2005/094127, qui permet de localiser le chauffage par induction en surface, de manière à délimiter le chauffage à l'interface moule/matière.

Un tel dispositif comprend des inducteurs entourant deux corps de moule électriquement conducteurs et comportant une zone chauffante destinée à être en contact avec le matériau à transformer, les corps de moule étant isolés électriquement l'un par rapport à l'autre. Ainsi, grâce à cette coupure électrique entre les deux corps de moule, les faces en regard de ces derniers délimitent un entrefer dans lequel circule le champ magnétique créé par les inducteurs. Le champ magnétique induit alors des courants électriques en surface des corps de moule, et en particulier à la surface de la zone chauffante de chaque corps de moule, permettant ainsi de localiser le chauffage en surface, à proximité directe du matériau à chauffer.

Un tel dispositif permet une montée en température des zones chauffantes très rapide et très importante, étant donné que l'énergie générée par les inducteurs est « injectée » directement à la surface des zones chauffantes, dans une épaisseur très faible (typiquement quelques dixièmes de millimètre). Afin de bénéficier au maximum de l'effet de l'entrefer, la largeur de celui-ci, c'est-à-dire la distance entre les faces en regard du dispositif lorsque celui-ci est en fonctionnement, doit être la plus faible possible, de l'ordre de un à quelques millimètres. En pratique, cette largeur est déterminée par l'épaisseur de la pièce à chauffer, qui joue le rôle d'isolant entre les deux parties du dispositif. Lorsque cette pièce est électriquement conductrice, on prévoit alors des cales isolantes d'épaisseur adaptée pour isoler les deux parties du dispositif, ou un revêtement isolant sur les surfaces en contact avec la pièce.

Certains matériaux nécessitent des techniques de moulage particulières. C'est le cas par exemple des matériaux thermoplastiques à fibres longues, dénommés L.F.T (« Long Fiber Thermoplastics »). Pour être correctement moulé, un tel matériau doit être déposé chaud sur un moule lui-même déjà en température. Cependant, les moules connus n'autorisent pas, du fait de leur inertie thermique, des cycles de chauffe/refroidissement suffisamment rapides pour pouvoir déposer le matériau sur un moule à la température idéale et ensuite refroidir ce moule pour obtenir une pièce solidifiée, le tout dans un temps industriellement intéressant. Pour pallier ce problème, les techniques actuelles mettent en oeuvre des moules maintenus à une température « intermédiaire » constante, qui est un compromis entre le fluage satisfaisant du matériau et sa solidification correcte dans le moule. Parallèlement, le matériau est déposé à une température très élevée, proche de sa limite de dégradation. Par exemple, pour un matériau L.F.T. déposé à 250°C, le moule utilisé sera à une température intermédiaire, comprise entre 80°C et 100°C, ce qui permet un fluage acceptable de la matière, et en même temps son refroidissement en dessous de son point de solidification.

Pour réaliser une telle opération, il est connu d'effectuer la préchauffe du matériau en dehors du moule, par exemple dans un four à infrarouges ou sur un plateau chauffant, puis de déplacer le matériau sur un moule en deux parties, ce dernier étant maintenu à la température nécessaire pendant le préchauffage du matériau. Le matériau est déposé dans le moule sous forme d'une pâte molle et malléable qui, sous la pression exercée par les deux parties de moule, se met à fluer pour occuper tout l'espace de moulage, prenant ainsi la forme de la pièce finale. Pour réaliser cette opération, il est nécessaire que les deux parties du moule, lorsqu'elles sont en contact, définissent une chambre de compression, c'est-à-dire qu'une étanchéité est assurée afin de pouvoir exercer la pression nécessaire au fluage du matériau sans que celui-ci ne s'échappe. La température du moule permet le refroidissement progressif du matériau en dessous de son point de solidification, afin que la pièce puisse être éjectée. Toutefois, la température du moule est souvent trop élevée pour un refroidissement optimal, et la pièce est souvent encore molle lorsqu'elle est retirée, ce qui pose des problèmes de qualité finale (déformations, contraintes résiduelles, etc.)

En résumé, les procédés mis en oeuvre actuellement représentent un compromis qui ne permet d'obtenir ni le fluage satisfaisant du matériau, ni le refroidissement suffisant de la pièce finie.

Il existe donc un intérêt à mettre en oeuvre un moule permettant des temps de cycle (chauffe/refroidissement) raccourcis, permettant de déposer le matériau sur un moule à une température très supérieure à la température « intermédiaire » (favorisant ainsi le fluage de la pièce pour un remplissage satisfaisant du moule), puis de refroidir rapidement ce moule à une température inférieure à la température intermédiaire (favorisant ainsi un refroidissement correct de la pièce finie).

Un dispositif à chauffage par induction tel qu'évoqué plus haut permet des cycles de montée en température/refroidissement très court, mais son utilisation pour le moulage d'un matériau tel que le L.F.T. parait inappropriée. En effet, la nécessité de prévoir une chambre de compression avec une étanchéité satisfaisante est difficilement compatible avec la technologie de ce type de dispositif, qui impose d'isoler électriquement les deux parties du moule pour que celui-ci soit chauffé.

L'invention a pour objet de modifier un tel dispositif pour le rendre apte au moulage de matériaux du type décrit plus haut. En particulier, l'invention part de la constatation qu'il n'est pas possible de faire préchauffer un tel moule s'il est ouvert, ou alors avec des performances trop faibles, car la largeur de l'entrefer peut alors atteindre plus d'une dizaine de centimètres, son effet devenant alors négligeable.

Le document AT 504 784 décrit un dispositif de chauffage de l'empreinte d'un moule par l'intermédiaire d'un rayonnement infrarouge

Ainsi, l'invention concerne un dispositif de moulage pour la transformation d'un matériau, comprenant :
- un corps de moule inférieur, ou matrice, réalisé en un matériau électriquement conducteur et comportant une zone moulante destinée à être en contact avec le matériau à transformer ;
- un corps de moule supérieur, ou poinçon, réalisé en un matériau électriquement conducteur; et comportant une zone moulante destinée à être en contact avec le matériau à transformer ;
- une pièce intermédiaire amovible, ou noyau, réalisée en un matériau électriquement conducteur, et intercalée entre la matrice et le poinçon ;
- des moyens inducteurs aptes à générer un champ magnétique enveloppant la matrice, le poinçon et la pièce intermédiaire ; ces trois éléments étant électriquement isolés deux à deux, afin que les faces en regard de la pièce intermédiaire et de la matrice d'une part, et, de la pièce intermédiaire et du poinçon d'autre part, délimitent deux entrefers dans lesquels circule le champ magnétique qui induit des courants à la surface des zones moulantes, de la matrice et du poinçon, permettant ainsi de localiser l'action des inducteurs à la surface des zones moulantes.

Dans une réalisation, des cales transparentes au champ magnétique assurent l'isolation électrique entre la matrice et la pièce intermédiaire d'une part, et entre la pièce intermédiaire et le poinçon d'autre part.

Dans une réalisation, les zones moulantes des deux corps de moule sont aptes à former une chambre fermée, par exemple une chambre dite de compression.

Dans une réalisation, une partie incluant la zone moulante d'au moins l'un des deux corps de moule comprend un composé magnétique, de préférence de perméabilité magnétique relative et de résistivité électrique élevées, par exemple un acier à base de nickel, de chrome et/ou de titane.

Dans une réalisation, une partie d'au moins l'un des deux corps de moule comprend un matériau différent de la partie comprenant la zone moulante, notamment une matériau amagnétique ou peu magnétique, par exemple un acier inoxydable.
d'une couche de blindage d'un matériau amagnétique empêchant la pénétration du champ magnétique dans le corps de moule.

Dans une réalisation, la pièce intermédiaire comprend un matériau amagnétique, de préférence de faible résistivité électrique, tel que de l'aluminium.

Dans une réalisation, la pièce intermédiaire comprend un revêtement de contact, tel que du silicone.

Dans une réalisation, la pièce intermédiaire comprend un matériau caractérisé par une émissivité supérieure à 0.7, tel que du graphite.

Dans une réalisation, au moins l'un des deux corps de moule comprend un réseau de canaux de refroidissement.

Dans une réalisation, la pièce intermédiaire comprend également un réseau de canaux de refroidissement.

Dans une réalisation, la fréquence du champ magnétique généré par les moyens inducteurs est au moins égale à 10 kHz et de préférence au plus égale à 100 kHz.

Dans une réalisation, les moyens inducteurs comprennent deux parties séparables, solidaires respectivement de la matrice et du corps supérieur.

L'invention concerne également un procédé de préchauffage d'un dispositif de moulage tel que défini ci-dessus ; le procédé comprenant les étapes de :
- intercaler la pièce intermédiaire entre la matrice et le poinçon ;
- isoler électriquement deux à deux la pièce intermédiaire et les deux corps de moule, afin que les faces en regard de la pièce intermédiaire et de la matrice d'une part, et, de la pièce intermédiaire et du poinçon d'autre part, délimitent deux entrefers, ;
- alimenter des moyens inducteurs pour générer un champ magnétique enveloppant la matrice, le poinçon et la pièce intermédiaire ;
- de telle sorte que le champ magnétique circule dans les deux entrefers, et induit des courants à la surface des zones moulantes, de la matrice et du poinçon, permettant ainsi de localiser le préchauffage à la surface des zones moulantes.

L'invention concerne également un procédé de moulage d'un matériau comprenant les étapes de :
- mettre en oeuvre le préchauffage d'un dispositif de moulage tel que défini ci-dessus ;
- retirer la pièce intermédiaire du dispositif de moulage ;
- déposer sur l'un des corps de moule un matériau à mouler ;
- mouler le matériau par mise sous pression entre les deux corps de moule ;
- refroidir le moule ;
- enlever la pièce solidifiée.

Enfin, l'invention concerne un procédé de moulage d'un matériau comprenant les étapes de :
- mettre en oeuvre le préchauffage d'un dispositif de moulage tel que défini plus haut, un matériau à mouler étant préalablement disposé entre la matrice et la pièce intermédiaire ;
- retirer la pièce intermédiaire du dispositif de moulage ;
- mouler le matériau par mise sous pression entre les deux corps de moule ;
- refroidir le moule ;
- enlever la pièce solidifiée.

D'autres caractéristiques et avantages de l'invention apparaîtront à la lecture de la description faite ci-dessous, cette dernière étant effectuée à titre d'exemple non limitatif en faisant référence aux figures ci-après sur lesquelles:
- les figures 1 à 3 représentent un dispositif selon l'invention, dans trois états correspondant à trois étapes de sa mise en oeuvre ;
- les figures 4a et 4b représentent un détail du corps de moule inférieur et la pièce intermédiaire ;
- la figure 5 représente une vue en coupe d'un dispositif selon l'invention ;
- la figure 6 est une vue de détail d'un mode de réalisation des contacteurs électriques dont est pourvu le dispositif de la figure 5.

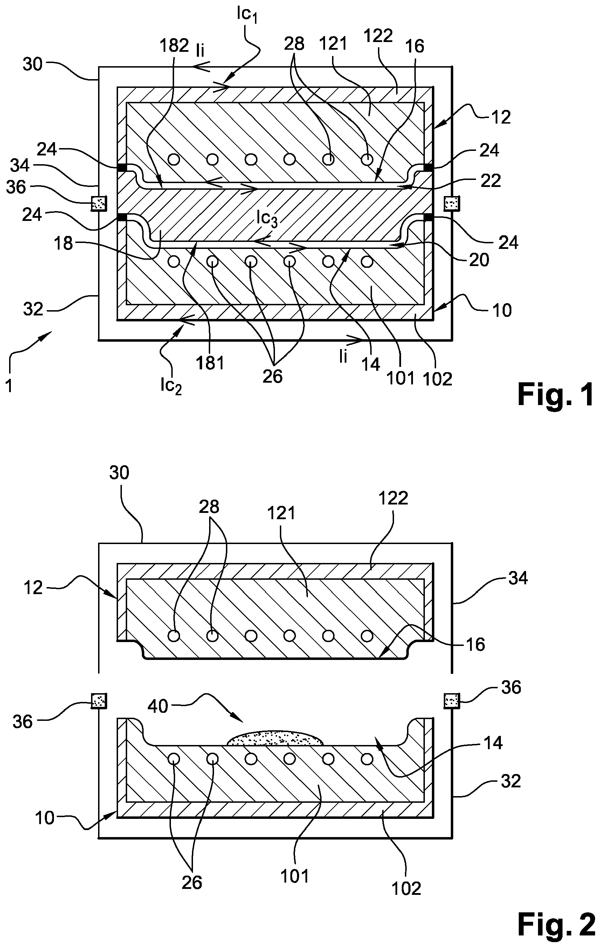

Le dispositif 1, représenté sur les figures 1 à 3, comprend deux corps de moule, un corps de moule inférieur, ou matrice 10 et un corps de moule supérieur, ou poinçon 12. Tous deux sont réalisés en un matériau électriquement conducteur, et ils comprennent chacun une partie constituant une zone chauffante, ou zone moulante, respectivement 14 pour la matrice 10 et 16 pour le poinçon 12. Les deux corps de moule 10, 12 sont aptes à venir au contact l'un de l'autre pour réaliser le moulage d'une pièce, les zones moulantes 14, 16, disposées en vis-à-vis, formant alors une chambre fermée, par exemple une chambre de compression.

Un réseau d'inducteurs 30, électriquement reliés en parallèle ou en série et connectés à un générateur de courant, est disposé autour de l'ensemble formé par la matrice 10 et le poinçon 12. Chaque inducteur 30 comporte une spire conductrice et comprend deux parties 32, 34 séparables. La partie inférieure 32 est solidaire de la matrice 10, tandis que la partie supérieure 34 est solidaire du poinçon 12.

Conformément à l'invention, afin de permettre le préchauffage du dispositif 1, une pièce intermédiaire, ou noyau 18, est disposée entre la matrice 10 et le poinçon 12. Le noyau 18 est réalisé en un matériau électriquement conducteur et sa forme est adaptée à la forme des zones moulantes de la matrice et du poinçon. Dans l'exemple de la figure 1, la forme du noyau 18 est exactement complémentaire de la forme des zones moulantes, mais, comme on le verra ultérieurement, d'autres configurations sont possibles. Le noyau 18 est isolé électriquement de la matrice 10 et du poinçon 12 grâce à des cales 24 transparentes au champ électromagnétique, réalisées par exemple en céramique. L'isolation peut être réalisée par tout autre moyen, par exemple un revêtement silicone d'épaisseur adaptée (quelques millimètres), disposé soit sur la matrice et le poinçon, soit sur chacune des faces du noyau.

Lorsqu'un courant alternatif Iᵢ alimente les moyens inducteurs 30, le champ électromagnétique généré enveloppe les deux corps de moule ainsi que le noyau 18. L'isolation électrique entre la matrice et le noyau d'une part, et entre le noyau et le poinçon d'autre part, permet que le champ électromagnétique circule dans les deux espaces séparant le noyau et chacun des deux corps de moule. On délimite ainsi deux entrefers 20 et 22, l'un entre les faces en regard du noyau 18 et de la matrice 10, l'autre entre les faces en regard du noyau 18 et du poinçon 12. Pour obtenir cet effet, il est également nécessaire que la matrice et le poinçon soient isolés électriquement l'un de l'autre lorsque le noyau est en place, comme montré sur la figure 1.

Le champ magnétique généré par les moyens inducteurs 30 circule dans les entrefers 20 et 22, c'est-à-dire entre la matrice 10 et le noyau 18, et entre le noyau 18 et le poinçon 12. Ainsi, il induit des courants Ic₁, Ic₂, et Ic₃ de sens opposé au sens des courants Iᵢ. Par l'effet des deux entrefers 20, 22, ces courants Ic₁, Ic₂, et Ic₃ circulent en boucle fermée, de manière indépendante, respectivement dans la matrice 10, le poinçon 12, et le noyau 18. Plus précisément, les courants induits Ic₁, Ic₂, Ic₃ circulent à la surface de ces trois éléments, dans une épaisseur très faible (quelques dixièmes de millimètres). Ces courants ont donc une action thermique (par effet résistif) exclusivement à la surface de ces trois corps, et notamment à la surface des zones moulantes 14, 16. La configuration de la figure 1 permet donc de chauffer efficacement les zones moulantes de la matrice et du poinçon.

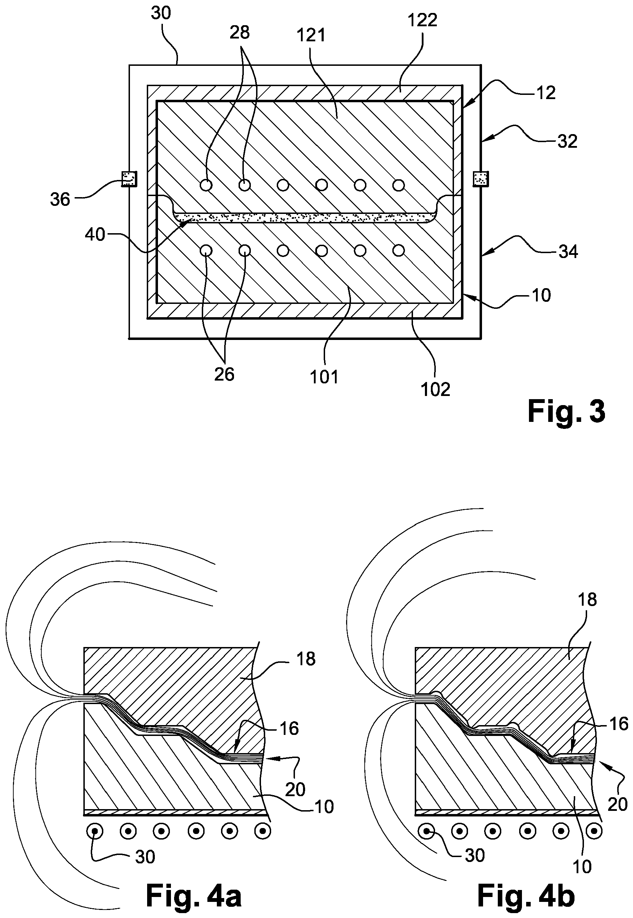

Une fois que les zones moulantes 14, 16 ont atteint la température désirée, le dispositif 1 est ouvert, le noyau 18 en est retiré, et l'on peut alors déposer sur la matrice 10 un matériau 40 à mouler. Dans l'exemple de la figure 2, le matériau est préchauffé avant dépose, mais il est entendu que d'autres matériaux peuvent être déposés sans préchauffage. Ensuite, le poinçon est, de manière classique, déplacé vers la matrice jusqu'à ce que ces deux éléments soient en contact et que la chambre de moulage (ou de compression) soit fermée. Il est à noter qu'à cette étape, représentée à la figure 3, la matrice et le poinçon ne sont plus nécessairement électriquement isolés, puisqu'on ne met plus en oeuvre les moyens inducteurs. Le moule, étant à la température désirée, n'a en effet plus besoin d'être chauffé pour réaliser le moulage du matériau 40.

Grâce au noyau intercalé entre la matrice et le poinçon, on profite de tous les avantages de la présence d'un entrefer tels que décrits par exemple dans la demande internationale précitée, et en particulier :
- localisation des courants (et donc de la chauffe) en surface, ce qui amène une très grande rapidité de chauffe puisque les corps de moule ne sont pas chauffés dans la masse,
- économie d'énergie,
- adaptabilité très fine de la chauffe en utilisant des matériaux différents pour certaines parties des zones moulantes,
- possibilité de disposer des moyens de refroidissement au plus près des zones moulantes, avec la rapidité de refroidissement qui en découle.

Un tel résultat ne peut être obtenu sans la présence d'un noyau conforme à l'invention, car, dans ce cas, on ne peut pas générer un effet d'entrefer. En effet, on ne peut rapprocher suffisamment la matrice et le poinçon, en particulier dans le cadre d'une chambre de compression qui comporte des surfaces de fermeture perpendiculaires au plan de joint du moule. C'est d'autant plus difficile que les formes des zones moulantes sont complexes.

Avec l'invention, il devient possible de réaliser des cycles de chauffe/refroidissement du moule dans le cadre du moulage d'un matériau tel que le L.F.T. Si l'on reprend l'exemple précédent d'un matériau déposé à une température de 250°C, le moule pourra être amené à une température très proche, par exemple autour de 200°C, puis, une fois que le matériau sera mis sous pression dans le moule fermé, le moule sera rapidement refroidi à une température proche de la température ambiante (soit bien moindre que la valeur de 80°C actuellement réalisable). On obtient donc, dans un temps de cycle plus court ou équivalent, un fluage du matériau et un remplissage du moule performants, combinés à un refroidissement et une solidification parfaits de la pièce finie. De plus, il devient possible de déposer le matériau à une température de préchauffage inférieure, donc avec une plus grande marge de sécurité par rapport à sa température de dégradation. Cela amène également une économie d'énergie supplémentaire et permet un refroidissement d'autant plus rapide.

L'ensemble de ces améliorations permet d'accroître grandement la qualité finale obtenue, sur l'ensemble des critères (épaisseur minimale réalisable, qualité de l'état de surface, finesse et qualité des détails tels que nervures, bossages, etc.)

Le dispositif selon l'invention est d'autant plus efficace que la présence des deux entrefers 20 et 22 a pour effet de concentrer le flux magnétique en leur sein, ce qui augmente encore l'action du champ magnétique au niveau des zones moulantes, et donc l'énergie inductive apportée à la surface des zones moulantes.

Les entrefers 20, 22 permettent en outre de limiter l'influence de la géométrie et/ou de la répartition des inducteurs sur le chauffage résultant car les entrefers ont pour effet de répartir plus uniformément l'énergie fournie par les inducteurs. Ainsi, des spires inductrices irrégulièrement espacées sur une longueur donnée le long du moule ont pratiquement le même effet que le même nombre de spires inductrices réparties régulièrement sur une même longueur. On rappelle qu'à l'opposé une configuration classique avec un inducteur à spires et une charge électro-conductrice sans entrefer produit une répartition énergétique inégale, l'énergie reçue par cette charge présentant un maximum local au droit de chaque spire inductive. Cette possibilité d'avoir une répartition inégale des spires d'inducteurs s'avère particulièrement avantageuse car, dans le dispositif objet de l'invention, les spires inductrices entourent le moule, et celui-ci peut être équipé d'un certain nombre d'éléments dépassants, tels que des cales montantes, des éjecteurs, etc. On peut ainsi laisser un intervalle plus important entre deux spires lorsque c'est nécessaire, sans affecter la qualité de la chauffe.

Le noyau 18 impose relativement peu de contraintes quant à sa conception et implique un surcoût négligeable par rapport au reste du dispositif. En effet, le noyau 18 peut être conçu en une pièce monobloc, obtenue par exemple par moulage ou forgeage, et il ne nécessite pas d'état de surface particulier (n'étant pas destiné à être en contact avec le matériau à mouler), et donc d'usinages coûteux. De plus, les efforts mécaniques appliqués au noyau 18 lors de la phase de chauffage sont faibles, ce qui impose peu de contraintes quant à sa résistance mécanique, et laisse ainsi une grande liberté dans le choix du matériau le constituant. Dans la plupart des cas, le noyau 18 sera en outre d'une épaisseur faible comparée à celle des deux corps de moule, ce qui réduit là encore le coût de fabrication du noyau 18, et plus généralement du dispositif selon l'invention. Le coût d'un noyau est de plus négligeable comparé au coût de réalisation d'une chambre de compression permettant d'isoler électriquement la matrice et le poinçon tout en réalisant l'étanchéité voulue.

Comme le noyau a pour fonction première de délimiter deux entrefers au sein du dispositif 1, sa forme subit moins de contraintes que celles des zones moulantes. On peut ainsi lui donner une forme qui ne soit pas strictement complémentaire de celles des zones moulantes de la matrice et du poinçon (comme montré sur la figure 1), mais qui, au contraire, s'en éloigne par endroits pour définir des formes d'entrefer particulières. Il est également possible de concevoir indépendamment les deux entrefers, notamment pour obtenir des effets de chauffe différents entre le poinçon et la matrice (par exemple chauffer plus la matrice que le poinçon, etc.)

On décrit ci-après un exemple de conception adaptée de la forme des entrefers. Comme la forme des surfaces 181, 182 du noyau 18 situées en vis-à-vis des zones moulantes 14, 16 peut être relativement indépendante de la forme des zones moulantes, on peut utiliser cette possibilité pour moduler très finement la chauffe obtenue, en jouant sur les phénomènes inductifs et résistifs. On peut, notamment, jouer sur la largeur de l'entrefer pour éviter des phénomènes locaux de sous chauffe et/ou de surchauffe. A titre d'exemple, les figures 4a et 4b représentent un détail du dispositif 1 montrant la matrice 10 et le noyau 18, et la circulation du champ magnétique dans l'entrefer 20 généré par les inducteurs. La figure 4a montre un entrefer 20 de largeur constante et l'on voit que lorsque celui-ci n'est pas rectiligne, les lignes de flux sont plus concentrées à l'intérieur de la courbe décrite par l'entrefer qu'à l'extérieur, du fait que le flux magnétique emprunte le chemin de moindre reluctance. Il se produit donc des surchauffes et des sous-chauffes à ces endroits courbes, respectivement à l'intérieur et à l'extérieur de la courbe. La figure 4b montre le même entrefer 20, mais de largeur non constante, en particulier de largeur modifiée localement aux endroits où l'entrefer décrit une courbe. Selon les cas, une augmentation ou une diminution de cette épaisseur permet de corriger la répartition non homogène du flux magnétique constaté à la figure 4a. On voit ainsi sur la figure 4b que la répartition du flux est homogène.

Le matériau utilisé pour constituer le noyau 18 est avantageusement amagnétique avec, de préférence, une faible résistivité électrique, comme par exemple le cuivre ou l'aluminium. Cela permet d'éviter au maximum les pertes énergétiques puisque qu'il est inutile, dans la plupart des applications, que le noyau 18 soit chauffé. Un noyau en matériau amagnétique sera bien sûr parcouru par des courants induits par le champ magnétique et donc légèrement chauffé, mais la quasi-totalité de l'énergie générée par les inducteurs sera injectée dans la matrice et dans le poinçon. Par exemple, si le noyau 18 est en aluminium, l'énergie qu'il reçoit représente environ 5% de l'énergie injectée dans la matrice 10 et le poinçon 12. Selon les cas, le noyau pourra être constitué de matériaux différents sur ses deux faces ou pour une même face (par exemple grâce à des inserts), permettant ainsi de contrôler finement et localement les phénomènes résistifs et inductifs (et donc les températures obtenues).

Afin de minimiser les pertes d'énergie dans la matrice 10 et le poinçon 12, ces deux éléments peuvent être réalisés en deux parties: une partie (respectivement 101 pour la matrice et 121 pour le poinçon), incluant la zone moulante 14, 16 associée, comprend un matériau magnétique, présentant éventuellement un point de Curie. Une deuxième partie (respectivement 102 pour la matrice et 122 pour le poinçon) comprend un composé amagnétique ou peu magnétique. Le matériau magnétique constituant les parties 101, 121 comprenant les zones moulantes 14, 16 présente de préférence une résistivité électrique plus importante que celle du cuivre, comme par exemple des alliages d'acier à base de nickel, de chrome et/ou de titane. Une résistivité électrique importante de la zone moulante constitue un avantage car elle permet un chauffage par induction plus efficace. Cependant, il est à noter que la perméabilité magnétique du matériau influe également sur le rendement du chauffage par induction. Les parties 102, 122 ne comprenant pas les zones moulantes comprennent un matériau réalisant un bon compromis entre caractéristiques mécaniques et propriétés magnétiques et électriques. En effet, afin de limiter les pertes énergétiques dans ces deux parties situées en arrière des zones moulante et de concentrer ainsi toute l'action du chauffage au niveau des surfaces des zones moulantes, le matériau constituant des parties 102, 122 doit être aussi peu magnétique et résistif que possible, tout en présentant la résistance mécanique nécessaire aux efforts importants et répétés des phases de moulage. A cette fin, l'acier inoxydable et le cuivre représentent des choix intéressants.

Dans une variante, la matrice 10 et le poinçon 12 pourront être réalisés conformément à la méthode décrite dans la demande internationale n° WO 2007/031660. Ainsi, la matrice 10 et le poinçon 12, incluant leurs zones moulantes respectives, seront constitués intégralement d'un matériau magnétique, tandis que les faces de la matrice et du poinçon situées en regard des moyens inducteurs seront recouvertes d'une couche de blindage en un matériau amagnétique tel que du cuivre, à l'exception des surfaces des zones moulantes 14, 16. Dans cette configuration, le blindage est tel que son épaisseur est supérieure à la profondeur de pénétration du champ électromagnétique. Ainsi, les courants induits circulent dans la couche de blindage, provoquant peu d'échauffement et peu de pertes énergétiques, sauf à l'endroit de la surface de la zone moulante, où le matériau est très réactif au chauffage par induction.

Le dispositif représenté sur les figures 1 et 2 est pourvu d'un système de refroidissement pour permettre la réalisation ou la transformation de pièces par chauffage à cadence élevée. A cet effet, on prévoit dans la matrice 10 et dans le poinçon un réseau de canaux (respectivement 26 et 28) permettant de faire circuler un liquide de refroidissement à proximité des surfaces des zone moulantes. Le refroidissement ainsi obtenu est très bon, d'une part parce que le corps de moule métallique est thermiquement très conducteur, et d'autre part parce que les canaux peuvent être disposés au plus près des surfaces des zones moulantes 14, 16. On réalise ainsi un refroidissement très performant car rapide et homogène sur l'ensemble de la pièce.

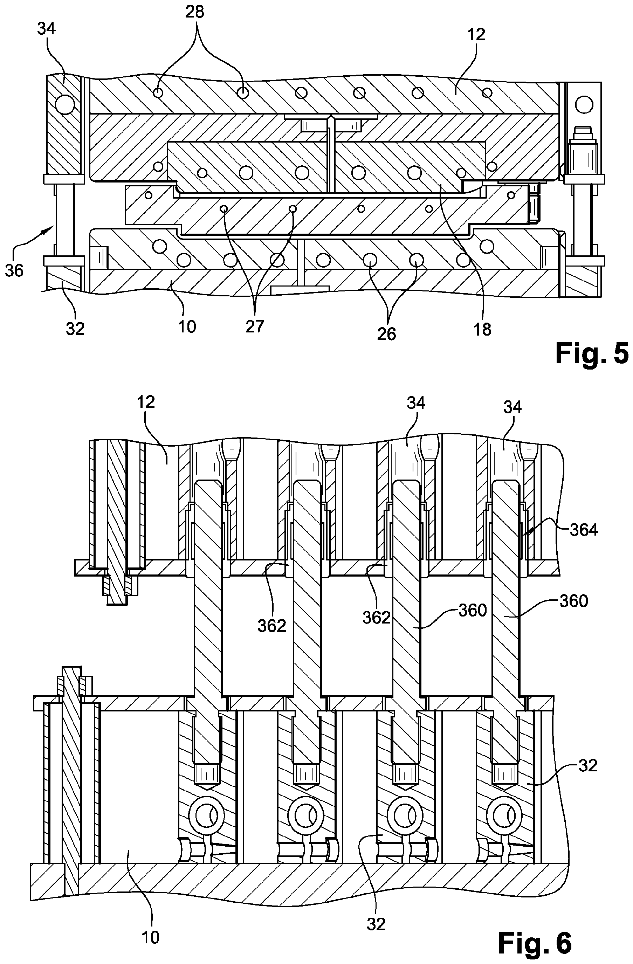

Dans certains cas, le noyau sera également pourvu d'un système de refroidissement, également sous forme de canaux 27, visibles sur la figure 5. En effet, même si celui-ci est peu chauffé, il peut atteindre une température importante au bout d'un certain nombre de cycles (le refroidissement pourra d'ailleurs n'être mis en oeuvre qu'au bout d'un nombre déterminé de cycles.)

Comme décrit plus haut, les inducteurs 30 sont en deux parties 32, 34 séparables et solidaires respectivement de la matrice 10 et du poinçon 12, ce qui permet une extraction rapide de la pièce après moulage, et contribue donc à une fabrication à cadence élevée. Lors de la phase de chauffage, la continuité électrique entre les deux parties 32, 34 du réseau d'inducteurs est assurée par des contacteurs électriques 36. Ces contacteurs électriques permettent un grand débattement tout en assurant la continuité électrique entre les deux parties séparables. En effet, pour alimenter les inducteurs lorsque le noyau 18 est intercalé entre la matrice 10 et le poinçon 12, il est nécessaire de disposer d'un débattement qui peut dépasser la dizaine de centimètres. Ainsi, dans l'exemple de la figure 6, chaque contacteur 36 est pourvu d'un élément mâle 360 solidaire de la partie inférieure 32, cet élément mâle coulissant dans un élément femelle 362 solidaire de la partie supérieure 34. Le contact électrique entre l'élément mâle 360 et l'élément femelle 362 est assuré par exemple par des lamelles métalliques élastiques 364, disposées à l'intérieur de l'élément femelle 362 et enserrant l'élément mâle 360. Dans l'exemple, l'élément femelle est prolongé par une cavité dans la partie supérieure 34 pour assurer le débattement nécessaire.

Le dispositif selon l'invention permet également de préchauffer des matériaux *in situ*, c'est-à-dire directement dans le moule. Le préchauffage du matériau *in situ* est par exemple utile pour certains matériaux composites qui se présentent sous forme d'une plaque rigide à froid, et qu'il est nécessaire de préchauffer pour pouvoir la déformer correctement. On réalise ainsi le préchauffage simultané du matériau et du dispositif de moulage. Dans ce but, le matériau est disposé sur la matrice 10 et le noyau 18 est disposé contre le matériau. Afin d'améliorer l'efficacité de cette phase de préchauffage, il est avantageux de recouvrir la face du noyau en contact avec le matériau d'un revêtement de contact, comme par exemple du silicone. Le noyau 18 peut ainsi exercer une pression sur le matériau, afin d'améliorer le contact entre la matrice chaude et le matériau, et donc la conduction thermique (toutefois, en l'absence de contact, la convection entre la matrice et la pièce est suffisamment efficace pour chauffer le matériau). En cas de pièce électriquement conductrice (par exemple des pièces contenant des fibres de carbone), ce revêtement permet d'isoler électriquement le noyau.

Dans une variante de l'invention, applicable aussi bien au préchauffage du dispositif 1 seul qu'au préchauffage *in situ*, le noyau 18 est réalisé dans un matériau permettant un chauffage par rayonnement. Un tel matériau doit à cet effet présenter un rayonnement thermique important lorsqu'il est chauffé, par exemple un matériau présentant une émissivité supérieure à 0.7, tel que le graphite. Un tel matériau est électriquement conducteur, ce qui permet donc toujours d'assurer la fonction première du noyau conformément à l'invention (*i.e.* délimiter deux entrefers), mais lorsqu'il montera en température suite à la circulation des courants induits, celui-ci va chauffer par rayonnement la matrice et le poinçon. Si l'on réalise un préchauffage *in situ* grâce à un noyau rayonnant, le noyau ne sera pas en contact direct avec le matériau à préchauffer mais disposé à proximité immédiate.

Dans une autre variante, on prévoit de mettre en oeuvre un noyau 18 métallique, en mettant à profit le chauffage par convection thermique. Le noyau sera alors disposé à proximité immédiate (mais non en contact) de la matrice et du poinçon dans le cas d'un préchauffage du dispositif 1 seul, ou du matériau et du poinçon dans le cas d'un préchauffage du matériau *in situ.* Avantageusement, le noyau 18 sera réalisé dans un matériau magnétique et/ou de forte résistivité électrique, afin que celui-ci soit fortement chauffé sous l'action des moyens inducteurs.

## Revendications

1. Dispositif (1) de moulage pour la transformation d'un matériau (40), comprenant :
- un corps de moule inférieur (10), ou matrice, réalisé en un matériau électriquement conducteur et comportant une zone moulante (14) destinée à être en contact avec le matériau à transformer ;
- un corps de moule supérieur (12), ou poinçon, réalisé en un matériau électriquement conducteur; et comportant une zone moulante (16) destinée à être en contact avec le matériau à transformer ;
- une pièce intermédiaire (18) amovible, ou noyau, réalisée en un matériau électriquement conducteur, et intercalée entre la matrice (10) et le poinçon (12) ;
- **caractérisé en ce que** des moyens inducteurs (30) aptes à générer un champ magnétique enveloppent la matrice (10), le poinçon (12) et la pièce intermédiaire (18) ; ces trois éléments étant électriquement isolés deux à deux, de sorte que les faces en regard de la pièce intermédiaire (18) et de la matrice (10) d'une part, et, de la pièce intermédiaire (18) et du poinçon (12) d'autre part, délimitent deux entrefers (20, 22) dans lesquels circule le champ magnétique qui induit des courants à la surface des zones moulantes (14, 16) de la matrice (10) et du poinçon (12), permettant ainsi de localiser l'action des inducteurs à la surface des zones moulantes (14, 16).

2. Dispositif selon la revendication 1, dans lequel des cales (24) transparentes au champ magnétique assurent l'isolation électrique entre la matrice (10) et la pièce intermédiaire (18) d'une part, et entre la pièce intermédiaire (18) et le poinçon (12) d'autre part.

3. Dispositif selon la revendication 1 ou 2, dans lequel les zones moulantes (14, 16) des deux corps de moule (10, 12) sont aptes à former une chambre fermée, par exemple une chambre dite de compression.

4. Dispositif selon l'une des revendications 1 à 3, dans lequel une partie (101, 121) incluant la zone moulante (14, 16) d'au moins l'un des deux corps de moule (10, 12) comprend un composé magnétique, de préférence de perméabilité magnétique relative et de résistivité électrique élevées, par exemple un acier à base de nickel, de chrome et/ou de titane.

5. Dispositif selon la revendication 4, dans lequel une partie (102, 122) d'au moins l'un des deux corps de moule (10, 12) comprend un matériau différent de la partie (101, 121) comprenant la zone moulante (14, 16), notamment une matériau amagnétique ou peu magnétique, par exemple un acier inoxydable.

6. Dispositif selon l'une des revendications 1 à 3, dans lequel au moins l'un des deux corps de moule (10, 12) comprend un matériau magnétique, ses faces situées en regard des moyens inducteurs (30), à l'exception de la surface de sa zone moulante (14, 16), étant recouvertes d'une couche de blindage d'un matériau amagnétique empêchant la pénétration du champ magnétique dans le corps de moule.

7. Dispositif selon l'une des revendications précédentes, dans lequel la pièce intermédiaire (18) comprend un matériau amagnétique, de préférence de faible résistivité électrique, tel que de l'aluminium.

8. Dispositif selon l'une des revendications précédentes, dans lequel la pièce intermédiaire comprend un revêtement de contact, tel que du silicone.

9. Dispositif selon l'une des revendications 1 à 6, dans lequel la pièce intermédiaire (18) comprend un matériau **caractérisé par** une émissivité supérieure à 0.7, tel que du graphite.

10. Dispositif selon l'une des revendications précédentes, dans lequel au moins l'un des deux corps de moule (10, 12) comprend un réseau de canaux de refroidissement (26, 28).

11. Dispositif selon l'une des revendications précédentes, dans lequel la pièce intermédiaire comprend un réseau de canaux de refroidissement (27).

12. Dispositif selon une des revendications précédentes dans lequel la fréquence F du champ magnétique généré par les moyens inducteurs est au moins égale à 10 kHz et de préférence au plus égale à 100 kHz.

13. Dispositif selon l'une des revendications précédentes, dans lequel les moyens inducteurs (30) comprennent deux parties séparables (32, 34), respectivement solidaires de la matrice (12) et du corps supérieur (20).

14. Procédé de préchauffage d'un dispositif selon l'une des revendications 1 à 13 ; le procédé comprenant les étapes de :
- intercaler la pièce intermédiaire (18) entre la matrice (10) et le poinçon (12) ;
- isoler électriquement deux à deux la pièce intermédiaire (18) et les deux corps de moule (10, 12), afin que les faces en regard de la pièce intermédiaire (18) et de la matrice (10) d'une part, et, de la pièce intermédiaire (18) et du poinçon (12) d'autre part, délimitent deux entrefers (20, 22) ;
- alimenter des moyens inducteurs (30) pour générer un champ magnétique enveloppant la matrice (12), le poinçon (12) et la pièce intermédiaire (18) ;
de telle sorte que le champ magnétique circule dans les deux entrefers (20, 22) et induit des courants à la surface des zones moulantes (14, 16) de la matrice (10) et du poinçon (12), permettant ainsi de localiser le préchauffage à la surface des zones moulantes (14, 16).

15. Procédé de moulage comprenant les étapes de :
- mettre en oeuvre le préchauffage d'un dispositif de moulage conformément au procédé selon la revendication 14 ;
- retirer la pièce intermédiaire (18) du dispositif de moulage ;
- déposer sur l'un des corps de moule un matériau (40) à mouler ;
- mouler le matériau (40) par mise sous pression entre les deux corps de moule ;
- refroidir le moule ;
- enlever la pièce solidifiée.

16. Procédé de moulage comprenant les étapes de :
- mettre en oeuvre le préchauffage d'un dispositif de moulage conformément au procédé selon la revendication 14, un matériau (40) à mouler étant préalablement disposé entre la matrice (10) et la pièce intermédiaire (18) ;
- retirer la pièce intermédiaire (18) du dispositif de moulage ;
- mouler le matériau (40) par mise sous pression entre les deux corps de moule ;
- refroidir le moule ;
- enlever la pièce solidifiée.

## Patentansprüche

1. Formgussvorrichtung (1) für die Formveränderung eines Materials (40), umfassend:
- einen unteren Formgusskörper (10) oder Matrize, die aus einem elektrisch leitenden Material hergestellt ist und eine formgebende Zone (14) umfasst, die dazu bestimmt ist, mit dem zu verändernden Material in Kontakt zu kommen
- einen oberen Formgusskörper (12) oder Stößel, der aus einem elektrisch leitenden Material hergestellt ist und eine formgebende Zone (16) umfasst, die dazu bestimmt ist, mit dem zu verändernden Material in Kontakt zu kommen
- ein entfernbares Zwischenteil (18) oder Kern, der aus einem elektrisch leitenden Material hergestellt ist und zwischen die Matrize (10) und den Stößel (12) geschoben wird;
- **dadurch gekennzeichnet, dass** das Feldsystem (30), das dazu fähig ist, ein Magnetfeld zu erzeugen, die Matrize (10), den Stößel (12) und das Zwischenteil (18) umhüllt, wobei diese drei Elemente derart paarweise isoliert sind, dass die Seiten gegenüber dem Zwischenteil (18) und der Matrize (10) einerseits, und gegenüber dem Zwischenteil (18) und dem Stößel (12) andererseits, zwei Luftspalten (20, 22) abgrenzen, in denen sich das Magnetfeld bewegt, welches die Ströme an der Oberfläche der formgebenden Zonen (14, 16) der Matrize (10) und des Stößels (12) induziert und so ermöglicht, die Aktion des Feldsystems auf die Oberfläche der formgebenden Zonen (14, 16) zu lokalisieren.

2. Vorrichtung nach Anspruch 1, bei der für das Magnetfeld durchlässige Keile (24) die elektrische Isolierung zwischen der Matrize (10) und dem Zwischenteil (18) einerseits und zwischen dem Zwischenteil (18) und dem Stößel (12) andererseits gewährleisten.

3. Vorrichtung nach Anspruch 1 oder 2, bei der die formgebenden Zonen (14, 16) der beiden Formgusskörper (10, 12) dazu fähig sind, eine geschlossene Kammer zu bilden, zum Beispiel eine sogenannte Druckkammer.

4. Vorrichtung nach einem der Ansprüche 1 bis 3, bei der ein die formgebende Zone (14, 16) von mindestens einem der beiden Formgusskörper (10, 12) einschließender Abschnitt (101, 121) eine magnetische Verbindung umfasst, vorzugsweise mit einer hohen relativen magnetischen Durchlässigkeit und einem hohen spezifischen elektrischen Widerstand, zum Beispiel einen Stahl auf Nickel-, Chrom- und/oder Titanbasis.

5. Vorrichtung nach Anspruch 4, bei der ein Abschnitt (102, 122) von mindestens einem der beiden Formgusskörper (10, 12) ein anderes Material als das der die formgebende Zone (14, 16) umfassende Abschnitt (101, 121) enthält, insbesondere ein nicht oder nur schwach magnetisches Material, wie zum Beispiel einen rostfreien Stahl.

6. Vorrichtung nach einem der Ansprüche 1 bis 3, bei der mindestens einer der beiden Formgusskörper (10, 12) ein magnetisches Material enthält, wobei seine dem Feldsystem (30) gegenüberliegenden Seiten mit Ausnahme der Oberfläche der formgebenden Zone (14, 16) mit einer nicht magnetischen Abtrennschicht bedeckt sind, die das Magnetfeld daran hindert, in den Formgusskörper einzudringen.

7. Vorrichtung nach einem der vorausgehenden Ansprüche, bei der das Zwischenteil (18) ein nicht magnetisches Material enthält, vorzugsweise mit einem niedrigen spezifischen elektrischen Widerstand, wie zum Beispiel Aluminium.

8. Vorrichtung nach einem der vorausgehenden Ansprüche, bei der das Zwischenteil eine Kontaktbeschichtung zum Beispiel aus Silikon umfasst.

9. Vorrichtung nach einem der Ansprüche 1 bis 6, bei der das Zwischenteil (18) ein Material enthält, das durch einen spezifischen Widerstand von über 0,7 wie zum Beispiel Graphit gekennzeichnet ist.

10. Vorrichtung nach einem der vorausgehenden Ansprüche, bei der mindestens einer der beiden Formgusskörper (10, 12) ein Kühlleitungsnetz (26, 28) umfasst.

11. Vorrichtung nach einem der vorausgehenden Ansprüche, bei der das Zwischenteil ein Kühlleitungsnetz (27) umfasst.

12. Vorrichtung nach einem der vorausgehenden Ansprüche, bei der die Frequenz F des vom Feldsystem erzeugten Magnetfelds mindestens 10 kHz und vorzugsweise höchstens 100 kHz beträgt.

13. Vorrichtung nach einem der vorausgehenden Ansprüche, bei der das Feldsystem (30) zwei trennbare Abschnitte (32, 34) umfasst, die jeweils mit der Matrize (12) und dem oberen Formgusskörper (20) verbunden sind.

14. Vorwärmverfahren einer Vorrichtung nach einem der Ansprüche 1 bis 13, das folgende Schritte umfasst:
- Einschieben des Zwischenteils (18) zwischen die Matrize (10) und den Stößel (12);
- paarweises elektrisches Isolieren des Zwischenteils (18) und der beiden Formgusskörper (10, 12), damit die Flächen gegenüber dem Zwischenteil (18) und der Matrize (10) einerseits und gegenüber dem Zwischenteil (18) und dem Stößel (12) andererseits zwei Luftspalten (20, 22) abgrenzen;
- Versorgen des Feldsystems (30), um ein die Matrize (12), den Stößel (12) und das Zwischenteil (18) umhüllendes Magnetfeld zu erzeugen,
sodass sich das Magnetfeld zwischen den zwei Luftspalten (20, 22) bewegt und an der Oberfläche der formgebenden Zonen (14, 16) der Matrize (10) und des Stößels (12) Ströme induziert, wodurch das lokalisierte Vorwärmen der Oberfläche der formgebenden Zonen (14, 16) ermöglicht wird.

15. Gussverfahren mit folgenden Arbeitsschritten:
- Durchführen des Vorwärmens einer Gussvorrichtung gemäß dem Verfahren nach Anspruch 14;
- Entfernen des Zwischenteils (18) aus der Gussvorrichtung;
- Auftragen auf einen der Formgusskörper eines zu gießenden Materials (40);
- Formgießen des Materials (40) durch Druckaufbau zwischen den beiden Formgusskörpern;
- Abkühlen der Gussform;
- Herausnehmen des gefestigten Werkstücks.

16. Gussverfahren mit folgenden Arbeitsschritten:
- Durchführen des Vorwärmens einer Gussvorrichtung gemäß dem Verfahren nach Anspruch 14, wobei vorab ein zu gießendes Material (40) zwischen der Matrize (10) und dem Zwischenteil (18) angebracht wird;
- Entfernen des Zwischenteils (18) aus der Gussvorrichtung;
- Formgießen des Materials (40) durch Druckaufbau zwischen den beiden Formgusskörpern;
- Abkühlen der Gussform;
- Herausnehmen des gefestigten Werkstücks.

## Claims

1. A molding device (1) for processing material (40) comprising:
- a lower mold body (10) or die, made in electrically conductive material and comprising a molding area (14) intended to be in contact with the material to process;
- an upper mold body (12) or punch, made in electrically conductive material and comprising a molding area (16) intended to be in contact with the material to process;
- a removable intermediate part (18) or core, made of electrically conductive material, which is inserted between the die (10) and the punch (12);
- **characterized in that** the inductive means (30) adapted to generate a magnetic field surround the die (10), the punch (12) and the intermediate part (18); these three elements are electrically insulated in pairs, so that the faces opposite the intermediate part (18) and the die (10) on the one hand and the intermediate part (18) and the punch (12) on the other demarcate two gaps (20, 22) in which flows the magnetic field that induces currents at the surface of the molding areas (14, 16) of the die (10) and the punch (12), thus making it possible to locate the action of the inductors at the surface of the molding areas (14, 16).

2. A device according to claim 1, wherein shims (24) transparent to the magnetic field electrically insulate the die (10) from the intermediate part (18) on the one hand and the intermediate part (18) from the punch (12) on the other.

3. A device according to claim 1 or 2, wherein the molding areas (14, 16) of the two mold bodies (10, 12) are adapted to form a closed chamber, for example a chamber known as a compression chamber.

4. A device according to any of claims 1 to 3, wherein a part (101, 121) including the molding area (14, 16) of at least one of the two mold bodies (10, 12) comprises a magnetic compound, preferably with high relative magnetic permeability and electrical resistivity, for example nickel-based steel, chrome-based steel and/or titanium-based steel.

5. A device according to claim 4, wherein a part (102, 122) of at least one of the two mold bodies (10, 12) comprises a material different from the part (101, 121) comprising the molding area (14, 16), particularly amagnetic material or poorly magnetic material, for example stainless steel.

6. A device according to any of claims 1 to 3, wherein at least one of the two mold bodies (10, 12) comprises magnetic material, its surfaces opposite the inductive means (30), with the exception of the surface of its molding area (14, 16), are covered by a shielding layer of amagnetic material that prevents the penetration of the magnetic field in the mold body.

7. A device according to any of the preceding claims, wherein the intermediate part (18) comprises amagnetic material, preferably with low electrical resistivity, such as aluminum.

8. A device according to any of the preceding claims, wherein the intermediate part comprises contact coating, such as silicone.

9. A device according to any of claims 1 to 6, wherein the intermediate part (18) comprises material **characterized by** emissivity above 0.7, such as graphite.

10. A device according to any of the preceding claims, wherein at least one of the two mold bodies (10, 12) comprises a network of cooling channels (26, 28).

11. A device according to any of the preceding claims, wherein the intermediate part comprises a network of cooling channels (27).

12. A device according to any of the preceding claims, wherein the frequency F of the magnetic field generated by the inductive means is at least equal to 10kHz and preferably at least equal to 100kHz.

13. A device according to any of the preceding claims, wherein the inductive means (30) comprise two separable parts (32, 34), integral with the die (12) and the upper body (20) respectively.

14. A method for warming up a device according to any of claims 1 to 13, wherein the method comprises the steps of:
- inserting the intermediate part (18) between the die (10) and the punch (12);
- electrically insulating in pairs the intermediate part (18) and the two mold bodies (10, 12), so that the surfaces opposite the intermediate part (18) and the die (10) on the one hand and the intermediate part (18) and the punch (12) on the other demarcate two gaps (20, 22);
- powering the inductive means (30) to generate a magnetic field that surrounds the die (12), the punch (12) and the intermediate part (18);
so that the magnetic field flows in the two gaps (20, 22) and induces currents at the surface of the molding areas (14, 16) of the die (10) and the punch (12), thus making it possible to locate the warming up at the surface of the molding areas (14, 16).

15. A molding method comprising the steps of:
- implementing the warming up of a molding device in accordance with the method according to claim 14;
- removing the intermediate part (18) from the molding device;
- placing a material (40) to mold on one of the mold bodies;
- molding the material (40) by applying pressure on it between the two mold bodies;
- cooling the mold;
- removing the solidified part.

16. A molding method comprising the steps of:
- implementing the warming up of a molding device using the method according to claim 14, when a material (40) to mold is first placed between the die (10) and the intermediate part (18);
- removing the intermediate part (18) from the molding device;
- molding the material (40) by applying pressure on it between the two mold bodies;
- cooling the mold;
- removing the solidified part.
